# EUROPEAN PATENT SPECIFICATION

(11) **EP 1 388 683 B1**
(45) Date of publication and mention of the grant of the patent: **02.11.2005**
(21) Application number: 03078117.3
(22) Date of filing: 26.02.1999
(51) Int. Cl.: F16D 41/12

(54) **Ratchet one-way clutch assembly**
Klinkeneinwegkupplungsanordnung
Ensemble d'embrayage à roue libre à crochets

(30) Priority: 02.03.1998 US 33451; 25.02.1999 US 257028
(43) Date of publication of application: 11.02.2004
(62) Divisional of application: 99910998.6
(73) Proprietor: BorgWarner Inc., Auburn Hills, MI 48326-2872 (US)
(72) Inventor: Costin, Daniel P., Naperville, IL 60565 (US); Papania, James R., Bolingbrook, IL 60440 (US); Bacon, Duane A., Vinton, OH 45686 (US); Pavangat, Nirmal, Rochester Hills, MI 48309 (US); Wells, James R., Sterling Heights, MI 48316 (US); Beno, Gerald F., Shelby Township, MI 48316 (US); Green, Ronald F., Birmingham, MI 48009 (US)
(74) Representative: Lerwill, John

(56) References cited:
- WO-A-98/10203
- US-A- 1 883 966
- US-A- 5 170 870
- US-A- 5 690 202

## Description

### Technical Field

The invention relates to ratchet one-way clutch assemblies with spring-biased pawls and outer members made from non-ferrous materials.

### Background Art

There are various types of one-way clutch assemblies in use today. Such clutch assemblies include sprag-type, rollertype, and pawl ratchet-type assemblies. All of these one-way clutch assemblies work satisfactorily depending upon the particular application in which they are used.

In certain transmissions, increased torque capacity is needed for one-way clutch assemblies. Space constraints also require that the size of the clutch assembly be retained within certain limits. Current one-way clutch assemblies with sprags or rollers are often insufficient to add increased load carrying capacity and still maintain the space constraints.

Pawl one-way clutch assemblies can add increased nominal load capacity for a given package size. The design limits of a ratchet-type pawl clutch assembly are dictated by contact stress between the pawls and the races and/or bending, shear, and hoop stresses generated within the races.

Ratchet clutch assemblies have at least one pawl which acts to lock two notched or pocketed races together in one direction and to rotate freely in the other direction. In general, the differences between known ratchet clutch assemblies relate to the control of the movement of the pawls and the effect on that movement by centrifugal forces. Ratchet clutch assemblies are shown, for example, in U. S. Patent Nos. 2,226,247, 3,554,340, and 5,449,057. Another ratchet clutch assembly is shown in British Patent No. 2116.

Another ratchet clutch assembly is known from EP-A-0923680, which is prior art under Art.54(3)EPC. EP0923680 discloses a one-way ratchet clutch with inner and outer race members, the outer race member having a plurality of pockets containing pawl members. The pawls can be biased into engagement with notches of the inner race centrifugally or by spring means.

US-A-1883966 discloses a clutch assembly comprising inner and outer race members, with pawl members being disposed inside pockets of the outer race member. The pawls are biased toward engagement with notches of the inner race by helical springs.

It is an object of the present invention to provide improved ratchet one-way clutch assemblies. It is another object of the present invention to provide improved ratchet clutch assemblies which have improved operation at high speeds.

It is also an object of the present invention to provide ratchet one-way clutch assemblies in which the pawls are provided with tilting forces or inclinations toward engagement. It is still another object of the present invention to provide ratchet one-way clutch assemblies which utilize springs to place tilting forces on the pawls toward engagement.

It is a further object of the present invention to provide improved ratchet clutch assemblies which are less expensive and lighter in weight than known assemblies and yet are comparable in operation and performance. It is a still further object of the present invention to provide ratchet oneway clutch assemblies made of non-ferrous materials, such as plastic or aluminum, which are strong, durable and lightweight.

It is also an object of the present invention to provide ratchet one-way clutch assemblies in which the outer race members are incorporated directly into, or as part of, stator/reactor members.

### Summary Of The Invention

The above and other objects of the invention are met by the present invention which is an improvement over known ratchet one-way clutch assemblies.

The present invention provides a one-way ratchet clutch mechanism comprising:
an outer member having a plurality of pockets, the outer member being made from a non-ferrous material;
an inner race member having a plurality of notches;
a plurality of pawl members, one of the pawl members positioned in each of the pockets; and
a plurality of Z-shaped spring members, one of the Z-shaped spring members biasing each of the pawl members towards engagement with the notches.

The plurality of notches can be toothed and positioned on the outer circumference of the inner race member to mate with the pawls in locking engagement during relative rotation of the races, or of the inner race and stators, in one direction. The notches may contain teeth on the outside of the race member which are shaped to prevent rotation of the outer race or stator in one direction, but allow freewheeling rotation in the opposite direction. The inside diameter of the inner race member can be adapted to mate with and be securely positioned to a support shaft, such as a stationary support shaft of a vehicle transmission.

The pawls can have peaks or ridges which mate with pivot ridges or recesses in the pockets in the outer race or stator member. The centre of mass of the pawls can be situated or positioned as desired such that when the clutch rotates, the centrifugal force on the centre of mass causes the pawl to move toward the engaged or disengaged positions. This is accomplished without an axle or stationary pivot.

The spring forces can act on the pawl members themselves or in recesses that extend axially along the pawls. The Z-shaped spring members can be wide springs, extending the axial length of the pawl members.

The stator member is made of a non-ferrous material which can be lighter in weight than materials conventionally used for clutch assemblies, particularly the outer race members. The non-ferrous material can be a metal material, such as aluminium, or a plastics material, such as polyethylene, which meet the durability and strength standards necessary for the application of the clutch assembly.

The ridge in the outer race or stator pocket can be located relative to the centre of mass of the pawls in order to control the engaging force. This is necessary for high speed durability. In this regard, it is possible in accordance with an alternative embodiment of the invention to position the centre of mass such that the pawl is urged toward the engaged position, or even a "neutral position" neither engaged nor disengaged.

The Z-shaped spring members used with the present invention can be Z-shaped folded springs. The spring forces can be applied on a centre groove or on one or more side grooves in the pawl members, or the spring forces can act on the pawl members themselves, or in recesses that extend axially along the length of the pawl.

Other embodiments of the invention utilize one or more axial retainment devices. These devices include pairs of washers, or plastic retainers with axial extending flange members. The devices retain the pawls axially and also hold the races in axial radial alignment, while allowing relative rotation. The retainment devices also act as thrust bearings and can retain required lubrication to prevent excessive wear of the pawls.

By eliminating the outer race members of clutch assemblies and incorporating the pawl pockets directly in a stator or reactor mechanism, or other similar member, expenses in materials and manufacturing procedures are reduced. Similarly, the inner race member can be eliminated and the notches incorporated directly into a central shaft member or the like. Again, this could cause savings in materials, manufacturing time and expense.

The present invention ratchet one-way clutch assembly has particular use in vehicle transmissions and can be used in environments where both races rotate or where one of the races is fixed. The invention can also be used in any mechanism where a positive backstop is desired to prevent undesired reverse or backward rotation, such as in an escalator mechanism or the like.

Other features, benefits and advantages of the present invention will become apparent from the following description of the invention, when viewed in accordance with the attached drawings and appended claims.

### Brief Description Of The Drawings

FIGURE 1 illustrates a ratchet one-way clutch assembly not embodying the invention.
FIGURE 2 is an enlarged view of a portion of the clutch assembly shown in Figure 1;
FIGURES 3 and 4 illustrate an alternate assembly which utilizes spring members, with Figure 4 being an elevational view and Figure 3 being an exploded view thereof;
FIGURES 5 and 6 show partial cross-sectional views of the assembly shown in Figure 4, the cross-sectional views being taken along lines 5-5 and 6-6, respectively, in Figure 4 and in the direction of the arrows;
FIGURE 7 is an enlarged view of a portion of the clutch assembly shown in Figure 4;
FIGURES 8, 9 and 10 illustrate various pawl members for use with a first spring-type clutch mechanism not embodying the invention;
FIGURES 11 and 12 illustrate pawl members for use with a second spring-type clutch mechanism not embodying the invention;
FIGURES 13 and 14 illustrate a further clutch assembly which does not embody the invention, with Figure 14 being an elevational view and Figure 13 being an exploded view thereof;
FIGURES 15 and 16 show partial cross-sectional views of the clutch assembly shown in Figure 14, the cross-sectional views being taken along lines 15-15 and 16-16, respectively, in Figure 14 and in the direction of the arrows;
FIGURE 17 is an enlarged view of a portion of the clutch assembly shown in Figure 14;
FIGURES 18 and 19 depict another ribbon spring clutch mechanism;
FIGURES 20 and 21 depict a coil spring clutch mechanism;
FIGURE 22 depicts a clutch mechanism which utilises a tab member.
FIGURES 23-27 depict embodiments of the invention, including embodiments with resilient members extending substantially across the lengths of the pawl members;
FIGURES 28-33A depict clutch mechanisms with wide spring members.
FIGURE 34 illustrates a clutch mechanism not in accordance with the invention wherein the pawl pockets are incorporated directly in a stator/reactor assembly;
FIGURE 35 is a cross-sectional view of the assembly of Figure 34, the cross-sectional view being taken along line 35-35 in Figure 34 and in the direction of the arrows;
FIGURE 36 shows an alternate construction of the assembly shown in Figures 34-35;
FIGURE 37 is an enlarged view of a portion of the assembly shown in Figure 36;
FIGURE 38 is a perspective view of the reinforcing members utilized in the assembly shown in Figures 36-37;
FIGURE 39 illustrates a clutch mechanism wherein the engaging notches for the pawl members are incorporated directly on a shaft member;
FIGURE 40 illustrates other pawl and pocket members for use with a clutch mechanism;
FIGURE 41 depicts still another clutch mechanism not embodying the invention; and
FIGURES 42-44 depict the presently preferred embodiment of the invention.

### Detailed Description

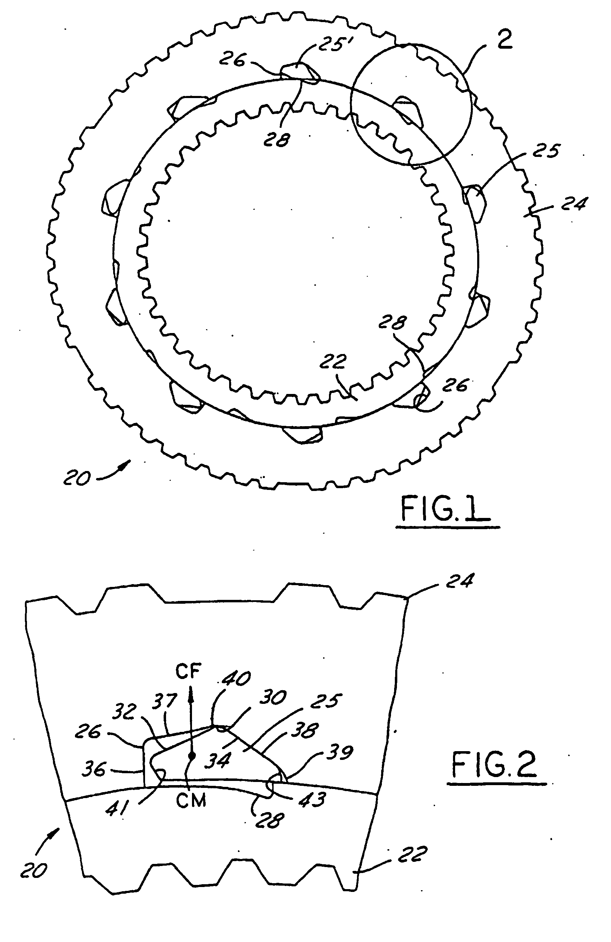

Figure 1 schematically illustrates one type of a ratchet one-way clutch assembly 20. The assembly 20 includes an inner race member 22, an outer race member 24, and a plurality of individual pawl members 25. The pawl members 25 are positioned in pockets 26 in the outer race member. A plurality of notches 28 are positioned in the outer circumference or periphery of the inner race member 22. The notches provide teeth which are shaped to prevent rotation of the two races relative to one another in one direction, but allow rotation in the other direction.

When the motion of the inner race member 22 relative to the outer race member 24 is in the clockwise direction in Figure 1, the inner race member rotates freely. When the relative motion of the inner race member 22 relative to the outer race member 24 is counter-clockwise, the inner race member and outer race member are locked together by one of the pawls 25. In this regard, in Figure 1, the locked pawl is indicated by the reference numeral 25'. The pawl 25' transmits force through pocket 26 in the outer race member and notch 28 in the inner race member.

In the clutch assembly shown in Figure 1, ten pockets 26 and ten pawl members 25 are shown, together with eleven notches 28 in the inner race member 22. Although the assembly shown in Figure 1 only shows one pawl 25'in engagement, more than one pawl can be engaged at one time depending on the relative number and location of the pawls and notches, as well as manufacturing tolerances. Mathematically, more than one pawl member can be engaged if the number of pawls and notches are both wholly divisible by a common denominator other than one.

Figure 2 is an enlarged view of a portion of the clutch assembly shown in Figure 1. The pawl 25 shown in Figure 2 is depicted in the free-wheeling position. The cross-section of the pawl 25 has a peak or pivot ridge 30 formed by the intersection of two substantially flat sides 32 and 34. The peak 30 of the crosssection forms a pivot ridge with the outer race pocket 26 which is shaped to receive the pawl member. In this regard, the pocket 26 has substantially straight sides 36,37,38 and 39.

In accordance with the assembly shown in Figure 2, the center of mass (CM) of the pawl member 25 is positioned to the left of the pivot ridge 30. In this manner, as the clutch assembly 20 rotates, a centrifugal force (CF) on the center of mass (CM) causes the pawl 25 to move toward the engaged position, that is, the position where it would be engaged with notch 28 in the inner race member 22. The torque on the pawl member 25 is proportional to the tangential distance of the CM away from the ridge 30.

Although the construction shown in Figures 1 and 2 shows a pawl member with the center of mass positioned, together with the pocket in the outer race, such that the pawl has a tendency to move toward the engaged position, other constructions can be utilized. For example, the geometry of the pawl can be changed to provide a pawl with a disengaging tendency. In this manner, the CM could be positioned to the right of the pivot ridge 30.

The pocket 26 in the outer race also has a peak or recess 40 which mates with the pivot ridge 30 of the pawl member 25. The peak 40 in the pocket holds the pawl 25 in the proper circumferential location for free movement in the pocket. This prevents the ends 42 and 43 of the pawl member 25 from coming in contact with the sides 36 and 39, respectively, of the pocket. If the ends of the pawl were to contact the adjacent areas of the outer race pocket, friction could slow the movement of the pawl toward engagement. Preferably, it is desirable for the pawls to rotate into engagement with the inner race member as quickly as possible.

The ridge on the pawl is precisely located relative to the center of mass of the pawl, regardless of the exact location of the pawl with respect to the outer race member. This allows precise control of the engaging force, which is preferred for high speed operation. This is also accomplished with a relatively simple geometry which does not include an axle, separate pivot member, or the like. Moreover, the outer race pocket is shaped such that it also has a " corresponding peak or recess, which retains the pawl in a precise location in the pocket. This location prevents the pawl from contacting the sides or ends of the pocket as it rotates toward engagement.

Preferably, the pawl members 25 are made of a hardened steel material and formed by pieces cut from a drawn wire. This allows precise control of the geometry of the pawl, and also allows precise control of the center of mass relative to the peak or pivot ridge 30. In this regard it is possible to control the center of mass within a tolerance of 0.0254mm (0.001 inches).

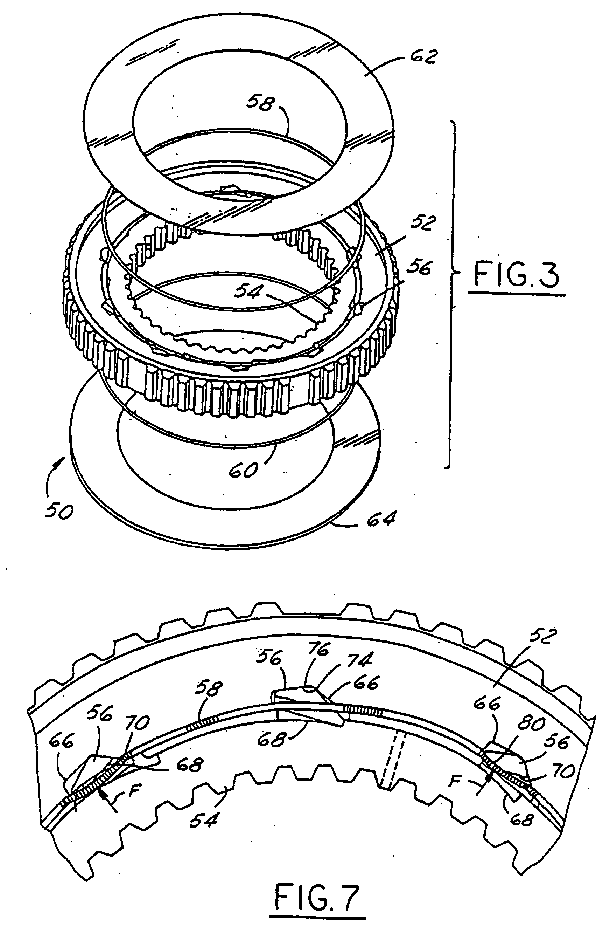

The construction shown in Figures 3-8 is referred to generally by the reference numeral 50. In the one-way ratchet clutch assembly 50, a spring is used to provide a tilting force on the pawl members toward engagement. A spring is particularly needed for pawls which are disengaged centrifugally, as well as for engaging pawls that must engage when the outer race is stationary. In Figures 3-8, the assembly 50 includes an outer race member 52, an inner race member 54, a plurality of pawl members 56, and a pair of garter springs 58 and 60. A pair of retainment washers 62 and 64 are also provided in the embodiment shown in Figure 3 and are discussed further below.

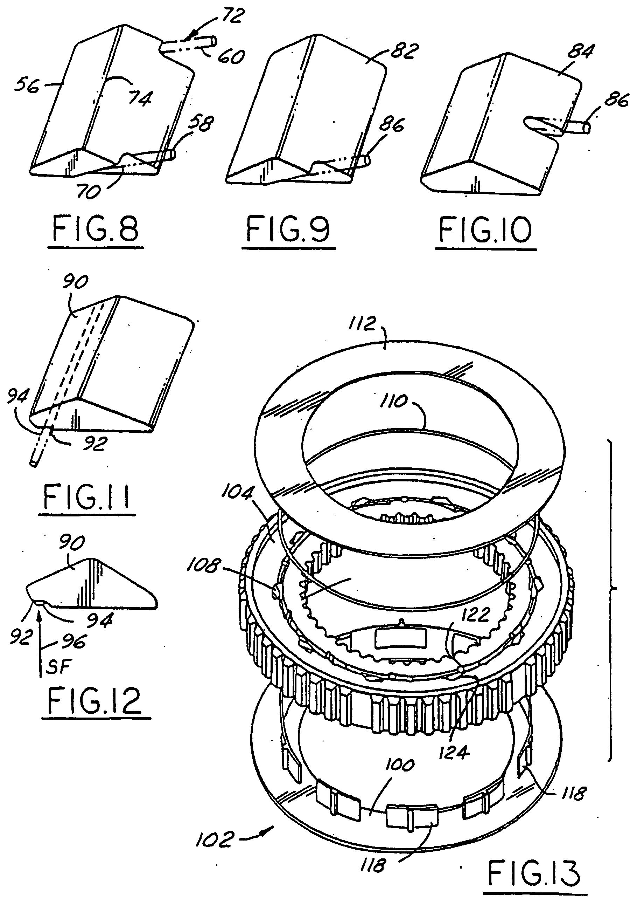

As shown more particularly in Figure 7, the pawl members 56 are positioned in pockets 66 in the outer race members 52 and are adapted to engage with notches 68 in the inner race 54. The garter springs 58 and 60, only one of which is shown in Figure 7, are made from a small coil of wire and are commonly available. For the assembly shown in Figure 3 which utilizes two garter springs 58 and 60, a plurality of pawl members 56 are utilized as shown in Figure 8. Each of the pawl members 56 has a pair of recesses or side grooves 70 and 72. The garter springs 58 and 60 are positioned in the grooves 70 and 72 when the pawl members are positioned in the outer race. The rest of the structure of the pawl member 56 is similar to pawl members 25 described above with respect to Figures 1 and 2; in this regard, the pawl members have pivot ridges 74 which mate with peaks or recesses 76 in the pockets 66.

The operation of the spring members 58 and 60 is shown with reference to spring 58 and pawl members 56 in Figure 7. In this regard, when the pawl members are in their disengaged position, the garter spring 58 provides a force toward outer race member and thus toward the engaging position of the pawl member. This spring provides a force F (as shown in Figure 7) against surface 80 of each of the pawl members. When the pawl members 56 are in their engaged positions, that is, mated with notches 68 in the inner race, the spring member 58 is relaxed and does not provide a spring force on the pawl members. This is shown with respect to the center pawl member 56 in Figure 7.

The spring force can also be arranged to act on a single side groove or a center groove of the pawl geometry. This is shown in Figures 9 and 10, respectively, where the pawl members are referred to by the reference numbers 82 and 84. The garter spring is indicated in phantom lines and is referred to by reference numeral 86. If either of the pawl assemblies shown in Figures 9 and 10 are utilized with the construction shown in Figures 3-7, then the position of the garter spring and the number of garter springs provided is adjusted accordingly.

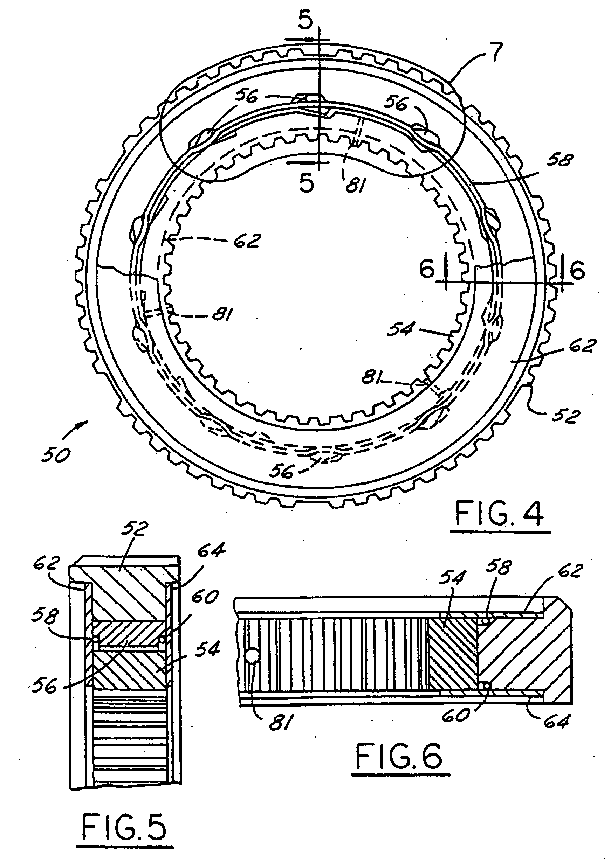

Opening or aperture 81 in the inner race 54 (Figure 6) provides an access hole for lubrication relative to the transmission or other mechanism in which the one-way clutch assembly 50 is utilized. Preferably, several access holes are provided in the clutch assembly.

The spring force on the pawl members can also be applied in another manner. As shown in Figures 11 and 12, the pawl member 90 has a longitudinally or axially extending groove 92. A small ribbon spring 94 is utilized to provide a spring force (SF) in the direction of arrow 96. The ribbon springs 94 are preferably cut from thin strips of spring steel material and are positioned in the grooves 92 in order to provide a force SF toward engagement of the pawl members 90.

The washers 62 and 64, as shown in Figures 3-6, are also known as axial retainment devices or members and can be used to improve or enhance the operation of the present invention. The members 62 and 64 retain the pawl members axially (longitudinally) in the clutch assemblies. The retainment members also hold the inner and outer races in axial alignment, while allowing free relative rotation. Moreover, the axial retainment members act as thrust bearings between the clutch assembly and external parts of the mechanism that are rotating relative to the clutch assembly and must carry an axial load through the assembly. Finally, the axial retainment members (washers) 62 and 64 can retain lubrication in the clutch assembly which is required to prevent excess wear of the pawl members.

The washers 62 and 64 can be connected to the outer race through a press-fit arrangement, staking, welding, or mechanical fastening in any conventional manner.

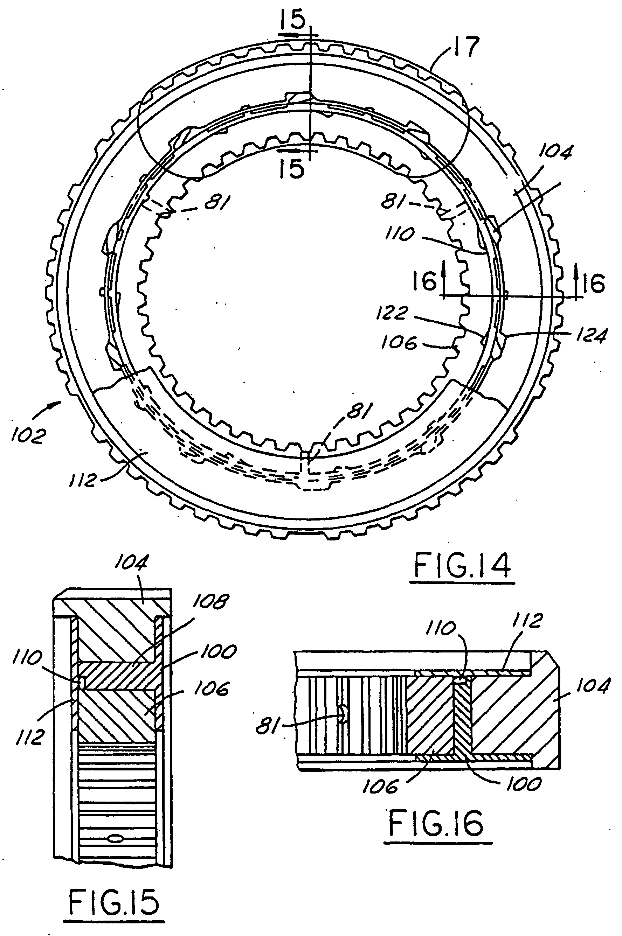

An injection molded plastic retainer (retainment) member can also be utilized. Such a member 100 is shown in Figures 13-17. In these Figures, the one-way ratchet clutch assembly is referred to generally by the reference numeral 102. Together with the retainer member 100, the assembly 102 includes an outer race member 104, an inner race member 106, a plurality of pawl members 108, a garter spring member 110 and a second retainer member 112.

In this regard, in the clutch assembly shown in Figures 13-17, the pawl members 108 can be of any of the types shown and described earlier. In addition, the pawl members 108 are contained in pockets 124 in the outer race member and engage notches 122 in the inner race member, in the same manner described above with reference to Figures 1-12.

The retaining member 100 has a plurality of flanges or upstanding arcuate-shaped guide members 118 situated to be positioned within the annular space between the inner and outer races 106 and 104, respectively. The member 100 is a radial bearing retainer for the pawls and the race members, and also acts as a lube dam for lubrication. The retainer members 100 and 112 are preferably attached together to retain the clutch assembly together axially. The retainer members also act as thrust bearings between the assembly and external parts of the mechanism that are rotating relative to the clutch assembly and carry axial loads through the assembly. The retainer members 100 and 112 can be connected together in any conventional manner, such as a press-fit arrangement, staking, ultrasonic welding, mechanical fastening, or the like. Preferably, the retainer member 100 is made from an injection molded plastic material, and also preferably has a low friction coefficient so that it can provide improved bearing performance over regular steel-on-steel bearings.

Another ribbon spring utilising clutch assembly is shown in Figures 18 and 19. Here, pawl members 90'are utilized which are the same as pawl members 90 described earlier, and have an axial groove 92'.

A ribbon spring member 130 has an annular circular shape and is adapted to fit between the inner and outer race members of the clutch assembly. The member 130 is preferably made of spring steel and has a plurality of openings or windows 132 (only one of which is shown), each with a tab member 134. The pawl members 90'are positioned in the openings 132 and the tab members are positioned in the grooves 92'. The ribbon spring member 130 through the tab members 134 provides a biasing force on the pawl members 90'toward engagement with the notches on the inner race member. Also, although the tab member 134 illustrated in Figure 18 only covers a small part of the width of the window 132 and the width of pawl 90', it is to be understood that tabs can be provided on the spring member 130 which extend most or entirely across the width of the window and pawl member.

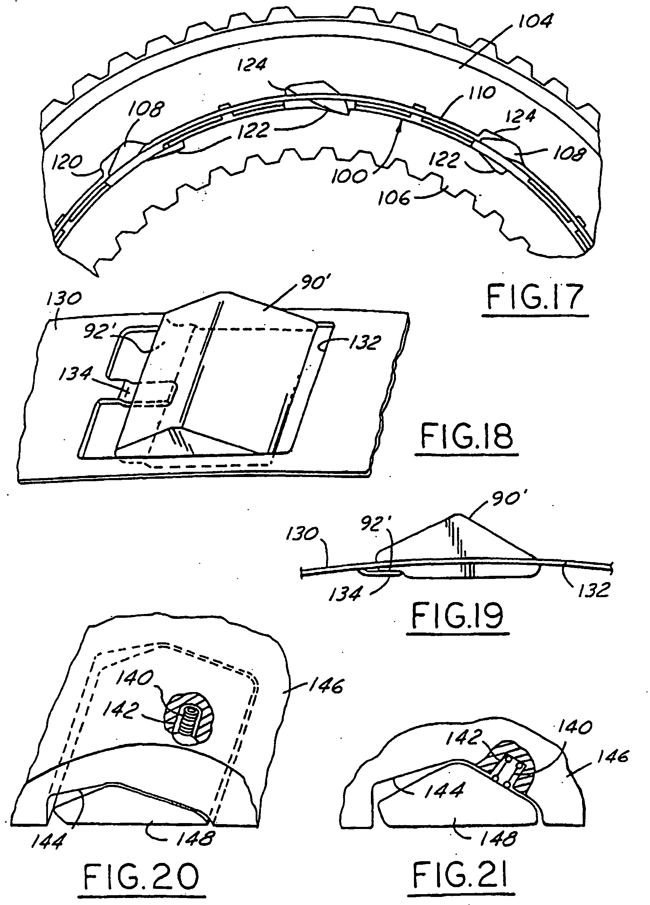

The spring mechanism for biasing the pawl members toward engagement with the inner race notches can have a wide variety of forms. Other than garter and ribbon springs described above, other spring members, such as coil springs, leaf springs, and the like could be utilized. For example, in this regard, a coil spring construction is shown in Figures 20 and 21. One or more coil springs 140 are positioned in recesses or bores 142 which connect to pockets 144 in the outer race member 146. The coil springs. 140 bias the pawl members 148 radially inwardly toward the inner race member.

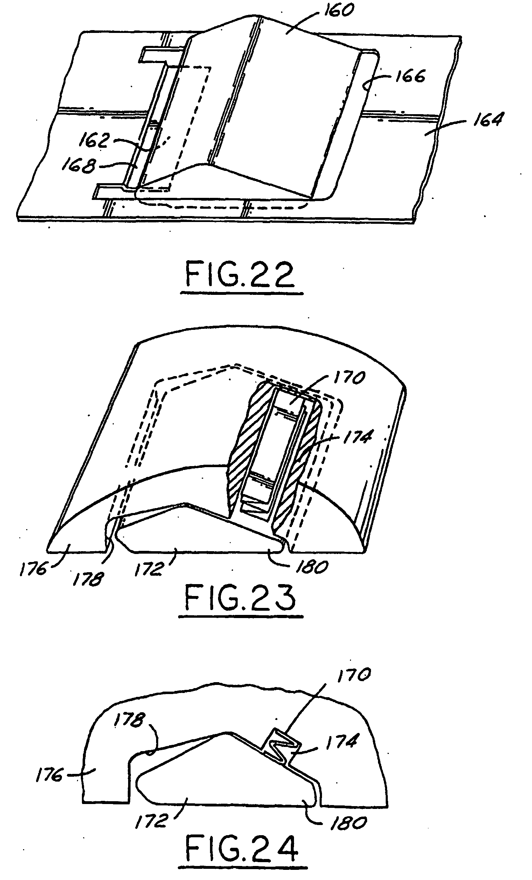

In the construction shown in Figures 22-24, the resilient biasing members extend across all or substantially all of the width of the pawl member. In Figure 22 (which is related to the construction shown in Figures 18 and 19), the pawl members 160 have an axial groove 162. A ribbontype spring member 164 has an annular shape and is adapted to fit between the inner and outer race members of the clutch assembly. The member 164 is preferably made of spring steel and has a plurality of openings or windows 166 (only one of which is shown), each with a tab member 168. The pawl members 160 are positioned in the openings 166 and the tab members 168 are positioned in the grooves 162. The ribbon spring member 164 through the tab members 168 provides biasing forces on each of the pawl members 160 in the clutch assembly toward engagement with the notches on the inner race member.

The spring tab member 168 is wider than the spring tab member 134 utilized with the construction shown in Figures 18 and 19. The wide spring member substantially reduces the rolling mode of rotation of the pawl member. As a result, the wide spring member prevents rattling of the pawl during the free wheeling mode of operation of the clutch assembly. Not only does the wide spring structure restrain the rolling mode of rotation, but it enhances fluid damping of the pawl members.

An embodiment of the invention utilizing a wide spring member is shown in Figures 23 and 24. In this embodiment, a wide accordion-type (or"Z-spring") spring member 170 is located radially outwardly of the pawl member 172. The spring member 170 is positioned in a recess or pocket 174 in the outer race member 176 which connects with the pawl pocket 178. The spring member 170, which preferably is made from a spring steel or equivalent material, pushes the toe 180 of the pawl member 172 into engagement with the notches in the inner race member. The width of the spring member 170 restrains the rolling mode of rotation of the pawl member. Fluid and frictional damping are also obtained with this design. The width of the spring member 170 preferably is substantially the same as the width of the pawl member, although it can also be slightly greater if space permits.

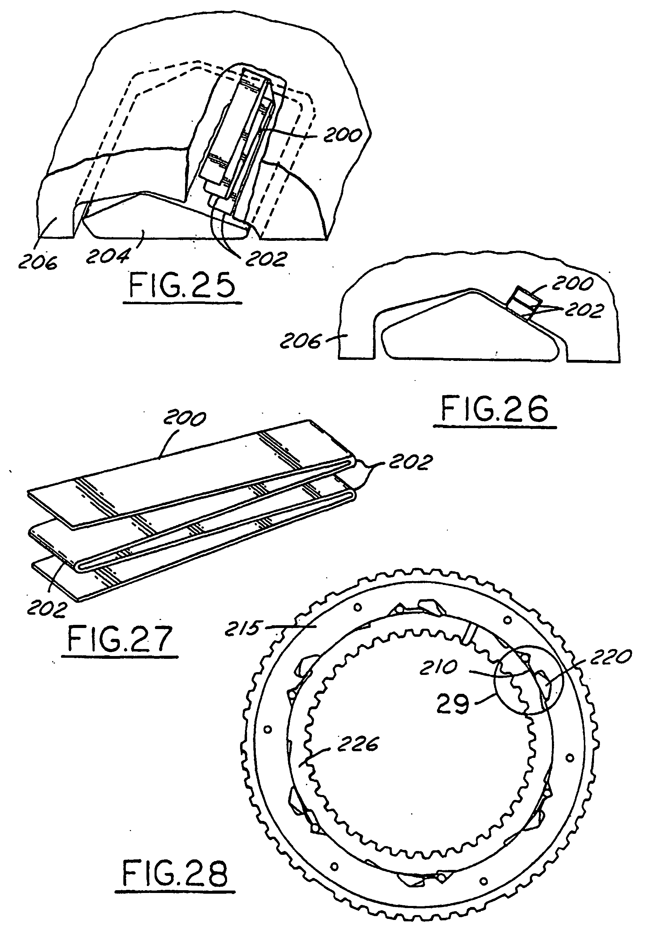

An type of accordion or Z-type spring member 200 which can be used with the present invention is shown in Figures 25-27. The spring member 200 is made from a single piece of spring steel or equivalent material and is cut and folded in the manner depicted. With spring member 200, the folds 202 are oriented in the tangential (annular) direction (transverse to the axial direction of the clutch) with the folds on the ends being positioned adjacent the outer or side surfaces of the clutch race members.

The spring member 200 is used to bias the pawl member 204 in the outer race member 206 in a direction toward engagement with the notches in the inner race member. Preferably, the spring member 200 extends the entire width, or substantially the entire width, of the pawl member 204.

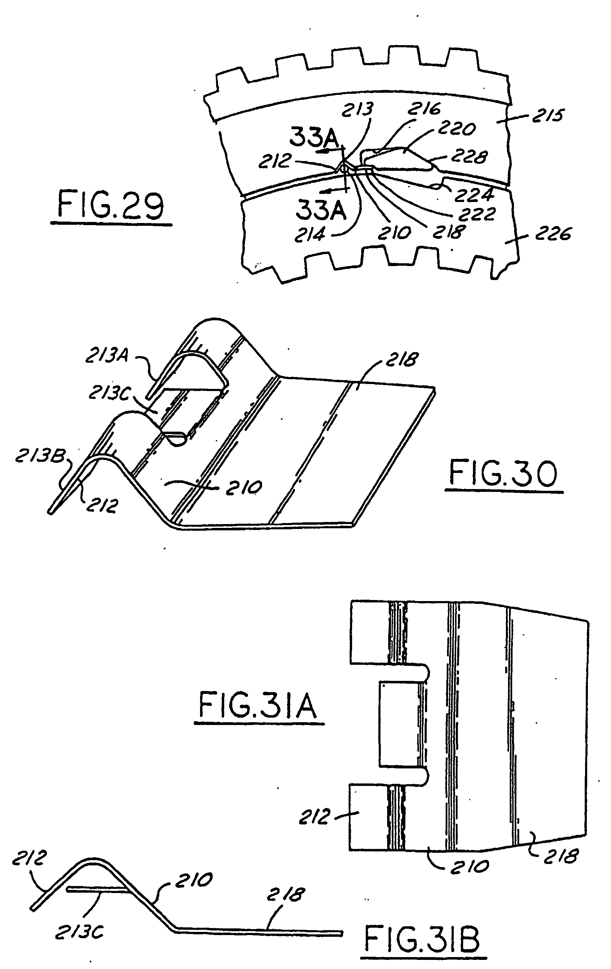

Another wide spring member 210 is shown in Figures 28-33A, but this spring member does not embody the present invention. This spring member is an individual spring member made of stainless steel (spring temper or high yield) and bent into the shape shown. The spring member 210 has an inverted V-shaped portion 212 which fits around a rivet 214, which in turn is secured in ancillary pocket 213 adjacent the main pawl pocket 216 in outer race member 215. The flat flange portion 218 of spring member 210 fits under recessed portion 222 of pawl member 220 and acts to bias the pawl member into engagement with notches 224 in inner race member 226. The pawl member 220 also has a recessed curved groove 228 on one surface to prevent the pawl from sticking to the surface of the pocket.

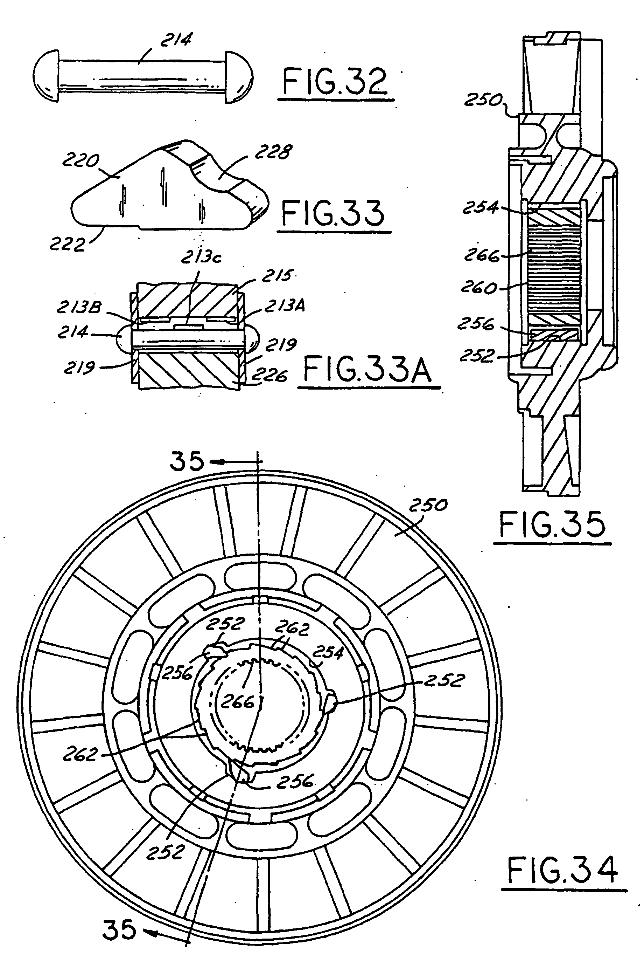

As shown in cross-section Figure 33A, when the spring member 210 is assembled in the clutch assembly, outer portions 213A and 213B of the V-shaped portion 212 are braced against the ancillary pocket 213 while center portion 213C is braced against the rivet member 214. Also, preferably a pair of washers or discs 219 are provided to assist in retaining the spring member 210 in place in the clutch assembly.

The wide-type spring members of the types shown in Figures 22-33A can be placed in various locations in clutch assemblies, and can be used on various types of ratchet clutches, including conventional ratchet clutches, ratchet clutches with pivot ridges on the pawl members, and planar ratchet clutches. Further, if desired, separate inner and/or outer race members can be eliminated from the mechanical structure in which the clutch-type mechanism is utilized, and the pawl pockets and mating"lock-up"notches can be formed directly in the mating mechanical structural parts, such as a rotor or shaft.

Alternate embodiments for use with the present invention are shown in Figures 34-44. These embodiments can provide improved economics in cost, manufacture and assembly procedures, as well as improved performance.

As shown in Figures 34-35, the pawl pocket members are incorporated directly as part of a stator or reactor member 250 for a torque converter or the like. The member 250 can be any integral part which would require a one-way clutch mechanism. Preferably, the member 250 is made from an aluminum, plastic or another material which can be cast and machined relatively easily. A plurality of pocket members 252 are formed and/or machined directly into the inner diameter surface 254 of the member 250. The pawl members 256, which are positioned in the pockets 252, can be of any of the types shown and described herein, and can be urged toward the engaged postion by predetermined positioning of the centre of mass CM, or by one of the various types of spring members or mechanisms, all as discussed herein.

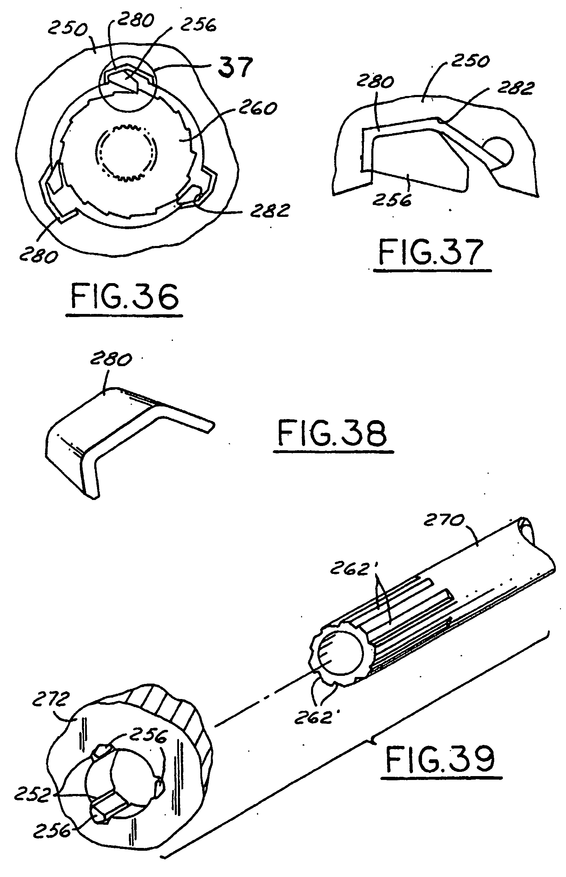

The inner member 260 can be any typical inner race member of the type discussed above with a plurality of locking notches 262 positioned around its outer circumference 264. Alternatively, the central shaft member which typically mates with the inner race member by mating teeth or spline members 266 or the like, can have the notches machined or formed directly on the outer circumference of the shaft, thereby eliminating the inner race member. Such an embodiment is shown in Figure 39 wherein a plurality of notches 262'are provided on shaft member 270, which typically is hollow, and the shaft member is then mated with member 272 which can be an outer race member, a stator or reactor member, or the like. Shaft member 270 can be, for example, part of a vehicle transmission.

Any number of pockets and notches can be provided as desired by the clutch designer and/or in accordance with the operating specifications and parameters for the clutch mechanism. In the construction shown in Figures 34-35, three pockets and pawl members are provided and uniformly spaced around the inner circumference/diameter of the outer member 250. In order to effectively and efficiently mate with this number of pawl members and to allow the clutch mechanism to lock-up in the desired time with limited backlash (e. g. twelve degrees), preferably ten notches are provided in the inner member.

Figures 36-38 depict a clutch assembly in which insert members 280 are provided. The insert members 280 are made from steel or another hard or hardened material and are used to prevent damage to softer materials which might be utilized for the outer stator, reactor or other member 250 when the clutch mechanism is utilized. The inserts can be made of stamped steel or the like.

The pocket members 282 in the member 250 are provided with a larger space or area to allow positioning of the insert members 280 therein. The insert members are press fit, swaged or otherwise permanently secured in the pockets 282. The pawl members 256 are positioned inside the cupped insert members as shown.

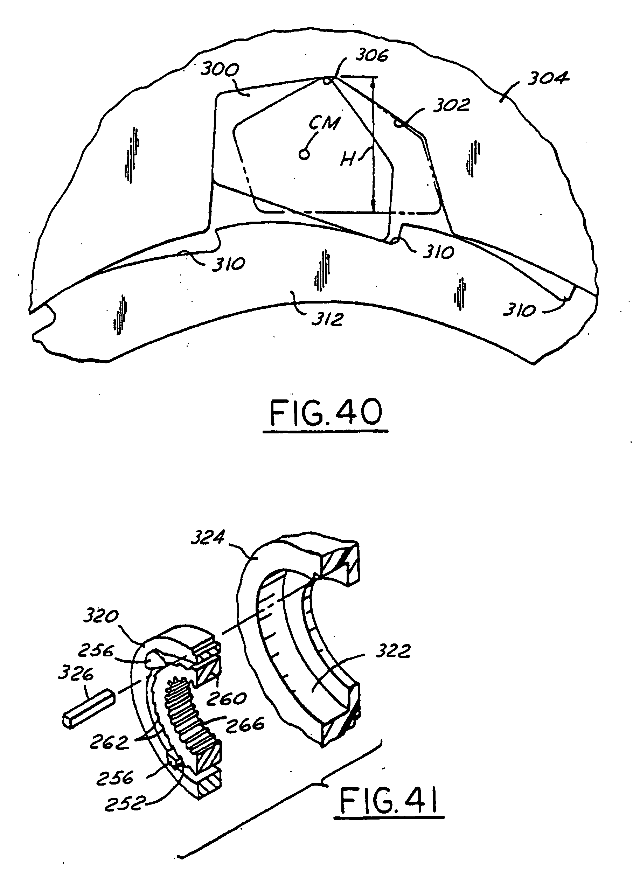

Another type of pawl member which can be utilized is shown in Figure 40. Here, the pawl member 300 has a different size and proportions from the pawl members shown above. In particular, the pawl members 300 have a greater height H in the radial direction. This increases the load-carrying capacity of the clutch mechanism.

As with the other constructions presented above, the pawl member 300 is positioned in a pocket 302 in an outer member 304, which can be an outer race, a stator or reactor, or the like. The center of mass CM of the pawl member 300 can be positioned as shown relative to the peak or pivot ridge 306, such that a pawl engaging force is generated upon rotation of the outer member 304. Similarly, a plurality of notches 310 are formed in the inner member 312, which can be an inner race, a shaft member, or the like.

It is also possible to utilize one of the spring members or mechanisms of the types and embodiments discussed above in order to assist in providing a tilting force on the pawl members 300 toward engagement. The use of retainment washers or thrust bearings on one or more sides of the ratchet one-way clutch mechanism shown in Figure 40 could also be provided. Appropriate lubrication channels and openings could further be provided as are conventionally utilized in the clutch art.

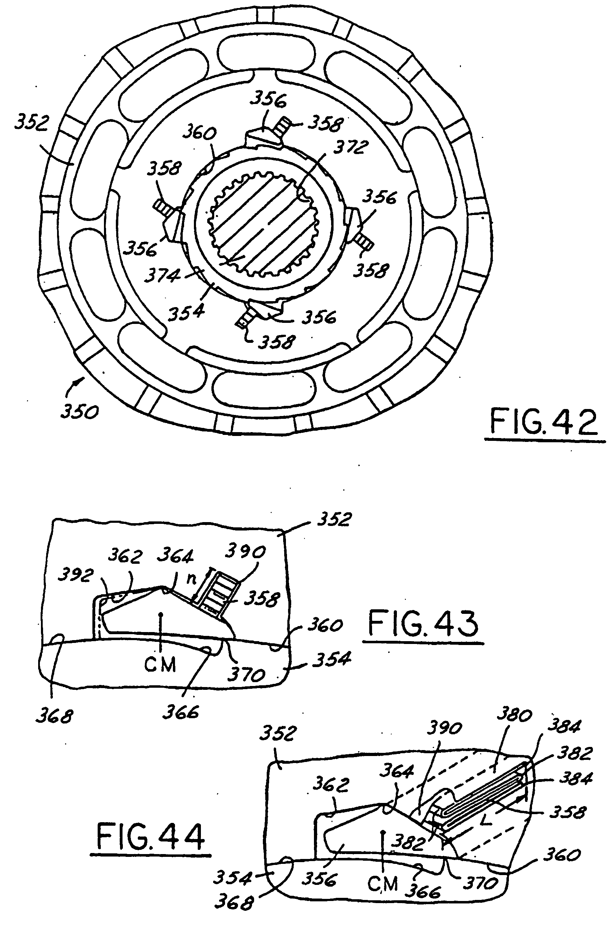

It is also possible to provide the outer member as an insert which is combined with a stator, reactor or other mechanical member. This is shown in Figure 41. The outer member 320 has an annular shape and is adapted to fit within cavity or recess 322 in the stator, reactor or other member 324. The outer member 320, which preferably is made from a metal material, can be press fit or keyed by key member 326 into the member 324. In this manner, the member 324 can be made from a lower cost material, such as a plastic material. The other portion of the clutch mechanism, including the inner member 260, pawl members 256 and the like are the same as those set forth above.

A further preferred embodiment of the invention is shown in Figures 42-44 and referred to generally by the reference number 350. This preferred embodiment of a pawl-type one-way clutch mechanism has essentially four parts: a stator member 352, an inner race member 354, a plurality of pawl members 356, and a plurality of spring members 358.

The inside diameter 360 of the stator member 352 is machined to accept the inner race member 354, preferably with a very small clearance (of the order of 0.025 - 0.127mm (0.001-0.005 inches)). The stator also has a plurality of pockets 362 formed in the inside diameter to house the pawl members 356. The pawl members and pockets are formed similar to the pawl members and pockets described above, except that the centers of mass (CM) are situated relative to the ridges 364 of the ridges such that the pawl members are biased towards disengagement.

The inner race member 354 has a plurality of notches 366 formed in its outer diameter or surface 368. The notches are formed to provide a plurality of teeth 370 which are used to engage the pawl members and prevent rotation of the stator member 352 in one direction relative to the inner race member 354. The two members 352 and 354 are allowed to rotate freely, i. e. freewheel, in the opposite direction. The inside diameter 372 of the inner race member 354 has a conventional splined configuration to mate with, for example, a. stationary support shaft member 374 anchored to a transmission.

The spring members 358 are leaf-spring members formed from folded pieces of spring-type metal material, such as steel. The material is folded into a Z-shaped spring configuration with the lengths 380 of the spring members being positioned in the axial direction of the clutch mechanism and the end folds 382 and free ends 384 of the spring members being positioned at or near the ends of the axial lengths of the pawl members. In this regard, the spring members 358 preferably extend substantially the full length of the pawl members 356 and provide engagement biasing forces uniformly across the pawl members.

The spring members 358 are positioned in recesses or pockets 390 formed in the stator member 352 and which intersect or open into the pawl pockets 362. The recesses 390 have a height "h" sufficient to retain the spring members 358 in a compressed or biased condition so that the springs will provide biasing forces on the pawl members. The recesses 390 have lengths"L" which are substantially the lengths of the pawl members.

In the embodiment shown in Figures 42+44, four pawl members and eighteen notches are provided. In the presently preferred embodiment, four pawl members and ten notches are provided. Other numbers of pawl members and notches can also be provided, as stated above, depending on the design of the one-way clutch assembly and its intended use and environment. Preferably, the arrangement and positioning of the pawl members and notches are provided such that two pawl members engage simultaneously to prevent rotation of the clutch mechanism.

The pockets 362 can be machined in the stator member 352 by a milling or broaching operation, as desired. The pockets also could be formed in the stator when it is cast. Preferably, a casting operation could provide the precise size and dimensions of the pockets to eliminate the need to finish machine them to a final dimension.

In the preferred embodiment shown in Figures 42-44, the inner race can be provided of a steel material, as is conventionally known. However, the outer member is made of non-ferrous material, such as aluminum or a plastic material. These materials are lighter in weight than steel and preferably should be provided with sufficient strength and durability to meet the specifications and required performance of the one-way clutch mechanism. The spring member and pawl members can be provided of any conventional materials used with present one-way clutch mechanisms, such as steel.

Although an aluminum metal material is preferred for the outer e.g. stator member, other non-ferrous metal materials could be utilized. These include titanium, zinc, nickel and superalloys commonly used in high temperature engine applications, such as gas turbine engines.

Plastic materials which could be utilized for the stator members 352 preferably include any materials used in high heat and high stress applications today. The materials should have high tensile and flexural strength and should have structural integrity in the presence of hydraulic fluids or other fluids commonly used in vehicle or engine transmission systems.

Both thermosetting and thermoplastic materials may be considered. Polymers such as polypropylene, polyethylene (high density preferred), nylon and polyvinylchloride (high molecular weight preferred) can be considered as-suitable plastic materials. One of ordinary skill in the art will readily appreciate that various design parameters may be adjusted by the addition of plasticizers, heat stabilizers, fillers, lubricants, and the like to the polymer. The plastic materials can also be reinforced with glass fibers or the like. Finally, as disclosed in U. S. Patent No. 5,121,686, phenolic resin plastics, also known by the tradename Duroplast, are used in the manufacture of automotive clutch assemblies and are also suitable for the manufacture of the stator members described herein.

In order to insure that the forces acting on the pawls due to engagement of the clutch mechanism, and thus the forces applied to the pocket walls in the stator members, do not damage the pockets or stator members, it is possible to provide inserts of a harder material in each of the pockets. Thus, insert members of the type described above with reference to Figures 36-38 could be provided. Similarly, the walls of the pockets could be lined with a harder coating or material, such as shown by dashed line 392 in Figure 43.

## Claims

1. A one-way ratchet clutch mechanism comprising:
an outer member (176;206;352) having a plurality of pockets (178;362), the outer member (176;206;352) being made from a non-ferrous material;
an inner race member (354) having a plurality of notches (366);
a plurality of pawl members (172;204;356), one of the pawl members (172;204;356) positioned in each of the pockets (178;362); and
a plurality of Z-shaped spring members (170; 200; 358), one of the Z-shaped spring members (170;200;358) biasing each of the pawl members (172;204;356) towards engagement with the notches (366).

2. A one-way ratchet clutch mechanism according to claim 1, wherein the pawl members (172;204;356) each have a ridge (364) thereon and said pockets (178,362) each have a corresponding recess for mating with said ridge (364); and
one of the Z-shaped spring members (170;200;358) is positioned in operative engagement with each of said pawl members (172;204;356) for biasing said pawl members (172;204;356) towards engagement with said notches (366).

3. A one-way ratchet clutch mechanism according to claims 1 or 2, wherein the outer member (176;206;352) is made from a plastic material.

4. A one-way ratchet clutch mechanism according to claim 1 or 2, wherein the outer material is made from aluminium and at least three pawl members (172;204;356) and at least ten notches (366) are provided.

5. A one-way ratchet clutch mechanism according to any one of claims 1 to 4, wherein four pawl members (172;204356) and ten notches (366) are provided.

6. A one-way ratchet clutch mechanism according to any one of claims 1 to 4, wherein four pawl members (172;204;356) and eighteen notches (366) are provided.

7. A one-way ratchet clutch mechanism according to claim 2, wherein the pawl members (172;204;356) have a centre of mass (CM) positioned relative to the ridge (364) such that upon rotation of the outer member (176;206;352), the pawl members (172;204;356) are moved toward disengagement with the notches (366) in the inner race member (354).

8. A one-way ratchet clutch mechanism according to claim 7, wherein one of said pawl members (172;204;356) is positioned freely in each of said pockets (178;362);
said pawl members (172;204;356) being retained in said pockets (178;362) during rotation of said outer member (176;206;352) in one direction relative to said inner race member (354), and at least one of said pawl members (172;204;356) being engaged with one of said notches (366) when said outer member (176;206;352) is rotated relative to said inner race member (354) in the opposite direction.

9. A one-way ratchet clutch mechanism according to any one of the preceding claims, wherein the Z-shaped spring members (170;200;358) are positioned with their width in the axial direction of the outer member (176;206;352).

10. A one-way ratchet clutch mechanism according to any one of the preceding claims 1 to 6, wherein the Z-shaped spring members (170;200;358) are positioned in recesses (174;390) in the outer member (176;206;352).

11. A one-way ratchet clutch mechanism according to any one of the preceding claims, further comprising protector means (280) in each of the pockets (178;362).

12. A one-way ratchet clutch mechanism according to claim 11, wherein the protector means (280) comprises an insert member (280).

13. A one-way ratchet clutch mechanism according to claim 11 or 12, wherein the protector means (280) comprises a hard coating material.

14. A one-way ratchet clutch mechanism according to any one of the preceding claims, further comprising annular disc members (62,64,100,112) positioned on opposite sides of said clutch assembly, wherein the disc members (62,64,100,112) assist in axially retaining the pawl members (172;204;356) in the pockets (178;362).

## Patentansprüche

1. Einweg-Klinkenkupplungseinrichtung, die umfasst:
ein äußeres Element (176; 206; 352) mit einer Vielzahl von Aussparungen (178; 362), wobei das äußere Element (176; 206; 352) aus einem Nichteisen-Material hergestellt ist;
ein inneres Laufradelement (354) mit einer Vielzahl von Einkerbungen (366);
eine Vielzahl von Klinkenelementen (172; 204; 356), wobei in jeder der Aussparungen (178; 362) eines der Klinkenelemente (172; 204; 356) positioniert wird; und
eine Vielzahl von Z-förmigen Federelementen (170; 200; 358), wobei jedes der Klinkenelemente (172; 204; 356) von einem der Z-förmigen Federelemente (170; 200; 358) zum Eingriff mit den Einkerbungen (366) hin vorspannt wird.

2. Einweg-Klinkenkupplungseinrichtung nach Anspruch 1, bei der die Klinkenelemente (172; 204; 356) jeweils einen Höcker (364) besitzen und die Aussparungen (178; 362) jeweils eine entsprechende Vertiefung zum Eingreifen mit dem Höcker (364) aufweisen; und
eines der Z-förmigen Federelemente (170; 200; 358) in funktionsfähigem Eingriff mit jedem der Klinkenelemente ( 172; 204; 356) so angeordnet ist, dass es die Klinkenelemente (172; 204; 356) zum Eingriff mit den Einkerbungen (366) hin vorspannt.

3. Einweg-Klinkenkupplungseinrichtung nach Anspruch 1 oder 2, bei der das äußere Element (176; 206; 352) aus einem Kunststoffmaterial hergestellt ist.

4. Einweg-Klinkenkupplungseinrichtung nach Anspruch 1 oder 2, bei der das äußere Material aus Aluminium besteht und mindestens drei Klinkenelemente (172; 204; 356) und wenigstens zehn Einkerbungen (366) vorgesehen sind.

5. Einweg-Klinkenkupplungseinrichtung nach Anspruch 1 bis 4, bei der vier Klinkenelemente (172; 204; 356) und zehn Einkerbungen (366) vorgesehen sind.

6. Einweg-Klinkenkupplungseinrichtung nach Anspruch 1 bis 4, bei der vier Klinkenelemente (172; 204; 356) und acht Einkerbungen (366) vorgesehen sind.

7. Einweg-Klinkenkupplungseinrichtung nach Anspruch 2, bei der die Klinkenelemente (172; 204; 356) einen Schwerpunkt (CM) besitzen, der im Verhältnis zum Höcker (364) so angeordnet ist, dass bei Drehung des äußeren Elementes (176; 206; 352) sich die Klinkenelemente (172; 204; 356) zum Lösen aus den Einkerbungen (366) im inneren Laufradelement (354) weg bewegen.

8. Einweg-Klinkenkupplungseinrichtung nach Anspruch 7, bei der eines der Klinkenelemente (172; 204; 356) in jeder Aussparung (178; 362) frei angeordnet ist;
wobei die Klinkenelemente (172; 204; 356) während der Drehung des äußeren Elementes (176; 206; 352) in einer Richtung relativ zum inneren Laufradelement (354) in den Aussparungen (178; 362) gehalten werden, und mindestens eines der Klinkenelemente (172; 204; 356) mit einer der Einkerbungen (366) in Eingriff ist, wenn das äußere Element (176; 206; 352) relativ zum inneren Laufradelement (354) in die entgegengesetzte Richtung gedreht wird.

9. Einweg-Klinkenkupplungseinrichtung nach einem der vorangehenden Ansprüche, bei der die Z-förmigen Federelemente (170; 200; 358) mit ihrer Breite in der axialen Richtung des äußeren Elementes (176; 206; 352) angeordnet sind.

10. Einweg-Klinkenkupplungseinrichtung nach Anspruch 1 bis 6, bei der die Z-förmigen Federelemente (170; 200; 358) in Vertiefungen (174; 390) im äußeren Element (176; 206; 352) angeordnet sind.

11. Einweg-Klinkenkupplungseinrichtung nach einem der vorangehenden Ansprüche, die ferner in jeder der Aussparungen (178; 362) eine Schutzeinrichtung (280) umfasst.

12. Einweg-Klinkenkupplungseinrichtung nach Anspruch 11, bei der die Schutzeinrichtung (280) ein Einlegeelement (280) umfasst.

13. Einweg-Klinkenkupplungseinrichtung nach Anspruch 11 oder 12, bei der die Schutzeinrichtung (280) ein hartes Beschichtungsmaterial umfasst.

14. Einweg-Klinkenkupplungseinrichtung nach einem der vorangehenden Ansprüche, die des Weiteren ringförmige Scheibenelemente (62; 64; 100; 112) umfasst, die an einander gegenüberliegenden Seiten der Kupplungsanordnung angeordnet sind, wobei die Scheibenelemente (62; 64; 100; 112) helfen, die Klinkenelemente (172; 204; 356) in den Aussparungen (178; 362) zu halten.

## Revendications

1. Mécanisme d'embrayage unidirectionnel comprenant :
un élément externe (176 ; 206 ; 352) comportant une pluralité de premières poches (178;362), l'élément externe (175 ; 206 ; 352) étant en matériau non-ferreux ; un élément d'anneau interne (354) comportant une pluralité d'encoches (366) ; une pluralité d'éléments de cliquets (172 ; 204 ; 356), l'un des éléments de cliquet (172 ; 204 ; 356) positionné dans chacune des poches (178 ; 362); et
une pluralité d'éléments de ressort en Z (170 ; 200 ; 358), l'un des éléments de ressort en Z (170 ; 200 ;358) sollicitant chacun des éléments de cliquets (172 ; 204 ; 356) en direction d'engagement avec les encoches (366).

2. Mécanisme d'embrayage unidirectionnel selon la revendication 1, dans lequel les éléments de cliquet (172 ; 204 ; 356) possèdent chacun une arête (364) sur ceux-ci et lesdites poches (178, 362) ayant chacune une cavité correspondant avec ladite arête (364) ; et
l'un des éléments en Z (170 ; 200 ; 358) est positionné en engagement fonctionnel avec chacun des éléments de cliquet (172 ; 204 ; 356) afin de solliciter lesdits éléments de cliquets (172 ; 204 ; 356) en direction d'engagement avec lesdites encoches (366).

3. Mécanisme d'embrayage unidirectionnel selon les revendications 1 ou 2, dans lequel l'élément externe (176 ; 206 ; 352) est en matériau plastique.

4. Mécanisme d'embrayage unidirectionnel selon les revendications 1 ou 2, dans lequel le matériau externe est fait en aluminium et au moins trois éléments de cliquets (172 ; 204 ; 356) et au moins dix encoches (366) sont prévus.

5. Mécanisme d'embrayage unidirectionnel selon l'une quelconque des revendications 1 à 4, dans lequel quatre éléments de cliquets (172 ; 204 ; 356) et dix encoches (366) sont prévus.

6. Mécanisme d'embrayage unidirectionnel selon l'une quelconque des revendications 1 à 5, dans lequel quatre éléments de cliquets (172 ; 204 ; 356) et dix-huit encoches (366) sont prévus.

7. Mécanisme d'embrayage unidirectionnel selon la revendication 2, dans lequel les éléments de cliquets (172 ; 204 ; 356) possèdent un centre d'inertie (CM) positionné par rapport à l'arête (364) de sorte qu'à la rotation de l'élément externe (176 ; 206 ; 352), les éléments de cliquets (172 ; 204 ; 356) sont déplacés en position de désengagement avec les encoches (366) dans l'élément d'anneau interne (354).

8. Mécanisme d'embrayage unidirectionnel selon la revendication 7, dans lequel un au moins des éléments de cliquets (172 ; 204 ; 356) sont positionnés librement dans chacune desdites poches (178 ; 362) ;
lesdits éléments de cliquet (172 ; 204 ; 356) étant retenus dans lesdites poches (178 ; 362) pendant une rotation dudit élément externe (176 ; 206 ; 352) dans une direction par rapport audit élément d'anneau interne (354), et au moins un desdits éléments de cliquet (172 ; 204 ; 356) étant en engagement avec au moins une desdites encoches (366) lorsque ledit élément externe (176 ; 206 ; 352) est mis en rotation par rapport audit élément d'anneau interne (354) dans la direction opposée.

9. Mécanisme d'embrayage unidirectionnel selon l'une des revendications précédentes, dans lequel les éléments de ressort en Z (170 ; 200 ; 358) sont placés avec leur largeur dans la direction axiale de l'élément externe (176 ; 206 ; 352).

10. Mécanisme d'embrayage unidirectionnel selon l'une quelconque des revendications 1 à 6, dans lequel les éléments de ressort en Z (170 ; 200 ; 358) sont placés dans les cavités (174 ; 390) dans l'élément externe (176 ; 206 ; 352).

11. Mécanisme d'embrayage unidirectionnel selon l'une quelconque des revendications précédentes, comprenant en outre un moyen de protection (280) dans chacune des poches (178 ; 362).

12. Mécanisme d'embrayage unidirectionnel selon la revendication 11, dans lequel le moyen de protection (280) comprend un élément de raccord (280).

13. Mécanisme d'embrayage unidirectionnel selon la revendication 11 ou 12, dans lequel le moyen de protection (280) comprend un matériau de revêtement dur.

14. Mécanisme d'embrayage unidirectionnel selon l'une quelconque des revendications précédentes, comprenant en outre des éléments de disque annulaire (62, 64, 100, 112) positionnés sur des côtés opposés dudit ensemble d'embrayage, dans lequel les éléments de disque (62, 64, 100, 112) permettent de retenir axialement les éléments de cliquet (172 ; 204 ; 356) dans les poches (178 ; 362).
